# EUROPÄISCHE PATENTANMELDUNG

(11) **EP 4 303 106 A1**
(43) Veröffentlichungstag der Anmeldung: **10.01.2024**
(21) Anmeldenummer: 23170743.1
(22) Anmeldetag: 28.04.2023
(51) Int. Cl.: B62J 9/10, B62K 19/30, B62K 3/02, B62J 9/40

(54) **FAHRRAD-STAUFACH**

(30) Priorität: 05.07.2022 DE 202022103752 U
(71) Anmelder: Canyon Bicycles GmbH, 56073 Koblenz (DE)
(72) Erfinder: Lay, Lorenz, 56068 Koblenz (DE)
(74) Vertreter: dompatent von Kreisler Selting Werner - Partnerschaft von Patent- und Rechtsanwälten mbB

(57) **Zusammenfassung**

Ein Fahrrad-Staufach weist ein innerhalb eines Fahrradrahmenrohrs (10), insbesondere eines Unterrohrs eines Fahrradrahmens angeordnetes Staufach (12) auf. Das Staufach (12) ist von einem Deckelelement (16) verschlossen. Mit Hilfe eines Fixierelements (18) erfolgt ein lösbares Fixieren des Deckelelements (16) am Fahrradrahmenrohr (10). Zur einfachen und zuverlässigen Bedienung und Fixierung weist das Fixierelement (18) ein am Fahrradrahmenrohr (10) oder Deckelelement (16) befestigtes Hebelelement (20) auf, das mit einem am Deckelelement (16) oder Fahrradrahmenrohr (10) vorgesehenen Ansatz (32) zusammenwirkt.

## Beschreibung

Die Erfindung betrifft ein Fahrrad-Staufach.

Zur Aufbewahrung von Gegenständen wie beispielsweise Fahrradwerkzeug, Schläuche, Ersatzteile, Regenjacken und dergleichen ist es bekannt neben Satteltaschen und anderen am Fahrrad zu befestigenden Taschen Fahrrad-Staufächer im Unterrohre eines Fahrradrahmens anzuordnen. Diese sind mit einem Deckelelement verschließbar.

Aufgabe der Erfindung ist es, ein Fahrrad-Staufach zu schaffen, dessen Deckelelement auf einfache Weise und zuverlässig verschließbar ist.

Die Lösung der Aufgabe erfolgt erfindungsgemäß durch ein Fahrrad-Staufach mit den Merkmalen des Anspruchs 1.

Das erfindungsgemäße Fahrrad-Staufach weist ein innerhalb eines Fahrradrahmenrohrs angeordnetes Staufach auf. Bei dem Fahrradrahmenrohr handelt es sich insbesondere um ein Unterrohr oder ein Sattelrohr eines Fahrradrahmens. Zum Verschließen des Staufachs weist das Fahrrad-Staufach ein Deckelelement auf. Ferner ist ein Fixierelement zum lösbaren Fixieren des Deckelelements am Fahrradrahmenrohr vorgesehen. Erfindungsgemäß weist das Fixierelement ein am Fahrradrahmenrohr oder am Deckelelement befestigtes Hebelelement auf, wobei auch mehrere Hebelelemente vorgesehen sein können. Das mindestens eine Hebelelement wirkt mit einem am Deckelelement oder Fahrradrahmenrohr vorgesehen Ansatz zusammen. Das Verschließen des Staufachs durch das Deckelelement erfolgt somit erfindungsgemäß durch Betätigen eines Hebelelements. Durch ein derartiges Hebelelement kann ein sicheres und zuverlässiges Verschließen und festes Fixieren des Deckelelements am Fahrradrahmenrohr sichergestellt sein. Insbesondere ist beispielsweise ein Lösen des Deckelelements auch beim Überfahren sehr groben Untergrundes vermieden. Ferner weist das Vorsehen eines Hebelelements den Vorteil auf, dass dieses derart ausgebildet sein kann, dass bei relativ geringer erforderlicher Schließkraft eine hohe und zuverlässige Haltekraft gewährleistet ist. Insbesondere ist beispielsweise auch ein Klappern des Deckelelements vermieden. Das Hebelelement kann insbesondere als Spannverschlussvorrichtung ausgeführt sein, wobei es bevorzugt ist, dass es sich bei dem Hebelelement, insbesondere dem Hebelelement mit dem Ansatz, um einen Spannverschluss handelt.

Vorzugsweise ist das Hebelelement über ein Basiselement fest am Fahrradrahmen oder am Deckelelement befestigt. Insbesondere ist das Hebelelement derart befestigt, dass es zwar einerseits bewegbar an dem Basiselement befestigt ist, andererseits aber über das Basiselement eine dauerhafte Befestigung realisiert ist, sodass es sich bei dem Hebelelement um kein gesondertes Element handelt, das gegebenenfalls auch verloren werden könnte.

Vorzugsweise ist das Hebelelement über einen Umlenkhebel am Fahrradrahmen oder am Deckelelement befestigt. Vorzugsweise erfolgt die Befestigung des Hebelelements über den Umlenkhebel am Basiselement, sodass der Umlenkhebel zwischen dem Hebelelement und dem Basiselement befestigt ist. Auch hierbei ist es wiederum bevorzugt, dass zwar eine bewegbare, jedoch dauerhafte Befestigung erfolgt. Durch Vorsehen eines Umlenkhebels ist es insbesondere möglich, bei geringen erforderlichen Bedienkräften zuverlässige Schließkräfte aufzubringen.

Vorzugsweise ist das Hebelelement mit einer Hauptachse schwenkbar verbunden. Die Hauptachse ist insbesondere in einem Bereich mit dem Hebelelement verbunden, dass das freie Ende des Hebelelements länger ist als das Ende des Hebelelements, das mit dem Ansatz zusammenwirkt. Hierdurch können entsprechende hohe Haltekräfte bei geringen Bedienkräften realisiert werden. Besonders bevorzugt ist es, dass zusätzlich ein Umlenkhebel vorgesehen ist und auch der Umlenkhebel mit der Hauptschwenkachse schwenkbar verbunden ist. Die Hauptschwenkachse ist somit in besonders bevorzugter Ausführungsform eine gemeinsame Achse, um die sowohl das Hebelelement als auch der Umlenkhebel verschwenkbar ist. Besonders bevorzugt ist es ferner, dass der Umlenkhebel über eine Zusatzachse schwenkbar ist. Die Zusatzachse kann unmittelbar mit dem Fahrradrahmenrohr oder mit dem Deckelelement verbunden sein, wobei es besonders bevorzugt ist, dass diese mit dem Basiselement verbunden ist. Durch eine derartige Ausgestaltung des Hebelelements in Verbindung mit einem Umlenkelement und zwei Achsen kann ein einfach und zuverlässig zu handhabender Hebelmechanismus realisiert werden.

In besonders bevorzugter Weiterbildung der Erfindung ist die Hauptachse parallel zur Zusatzachse angeordnet. Unabhängig von der Anordnung der Zusatzachse zur Hauptachse, insbesondere bei einer parallelen Anordnung der beiden Achsen sind diese vorzugsweise derart angeordnet, dass in geschlossenem Zustand des Fixierelements, d.h. bei durch das Deckelelement geschlossenem Staufach das Fixierelement durch Selbsthemmung geschlossen bleibt. Dies ist insbesondere dadurch realisiert, dass beim Verschließen das Hebelelement über einen unteren Todpunkt bewegt wird. Das Hebelelement in Verbindung mit dem Umlenkelement funktioniert somit nach dem Kniehebelprinzip. Um ein sicheres Verschließen und eine zuverlässige Selbsthemmung im geschlossenen Zustand zu gewährleisten, ist es besonders bevorzugt, dass eine Gegenkraft erzeugt wird. Die Gegenkraft kann durch plastische Elemente vorgesehen werden, die beim Umlegen des Hebelelements bis zum Erreichen des Todpunktes komprimiert werden und sodann wieder geringfügig zu expandieren. Hierdurch wird eine Gegenkraft erzeugt. Besonders bevorzugt ist es, diese Gegenkraft durch eine Dichtung hervorzurufen. Hierbei ist ein entsprechendes elastisches Dichtelement an einer Innenseite des Deckelelements bzw. zwischen dem Deckelelement und dem Fahrradrahmen angeordnet und wird beim Schließen des Fixierelements durch Umlegen des Hebelelements komprimiert.

Des Weiteren ist es bevorzugt, dass das Fixerelement an einer Seitenwand des Fahrradrahmenrohrs angeordnet ist. Hierdurch ist es möglich, das Deckelelement insbesondere an einer Oberseite des Fahrradrahmenrohrs anzuordnen, so dass das Staufach gut zugänglich ist.

Zur einfachen Bedienung und Handhabung ist es des Weiteren bevorzugt, dass die Hauptachse und/oder die Zusatzachse sich im Wesentlichen in Längsrichtung des Fahrradrahmenrohrs erstrecken.

Je nach Ausgestaltung ist der mit dem Hebelelement zusammenwirkende Ansatz am Deckelelement oder am Fahrradrahmenrohr angeordnet. Eine Längsachse des Ansatzes verläuft in besonders bevorzugter Ausführungsform, parallel zur Hauptachse. Wenn beispielsweise mehrere Ansätze vorgesehen sind, verläuft eine Verbindungslinie der Ansätze parallel zur Hauptachse. Auch können mehrere, insbesondere parallel zueinander angeordnete Hebelelemente vorgesehen sein, die mit einem gemeinsamen Ansatz zusammenwirken, wobei auch je Hebelelement ein gesonderter Ansatz vorgesehen sein kann.

Ferner ist es bevorzugt, dass das Deckelelement auf einer dem Fixierelement gegenüberliegenden Seiten ein Haltelement aufweist. Hierbei kann es sich um ein Scharnier handeln, über das das Deckelelement mit dem Fahrradrahmenrohr verbunden ist. Ferner kann anstatt eines Halteelements auf der gegenüberliegenden Seite ein entsprechendes Hebelelement wie vorstehend beschrieben, angeordnet sein. Dies kann sodann wie vorstehend beschrieben einen Umlenkhebel, ein Basiselement und dergleichen aufweisen.

In bevorzugter Ausführungsform weist das Halteelement eine Nut auf, in die ein Vorsprung eingreift. Das Deckelelement wird somit in das Halteelement eingesteckt. Besonders bevorzugt ist es hierbei, dass das Deckelelement selbst die Nut aufweist, und der Vorsprung durch das Fahrradrahmenrohr ausgebildet ist.

Bei einer weiteren besonders bevorzugten Weiterbildung ist es möglich, mit dem Deckelelement ein Zusatzelement, wie beispielsweise einen Trinkflaschenhalter zu verbinden. Auch kann ein Trinkflaschenhalter einstückig mit dem Deckelelement ausgebildet sein. Zum Verbinden eines Zusatzelements wie eines Trinkflaschenhalters ist es bevorzugt, dass das Deckelelement mindestens eine Verdickung zur Aufnahme von mindestens einer Halterung aufweist. Bei den Halterungen kann es sich beispielsweise um Gewindeeinsätze handeln, an denen ein Zusatzelement wie ein Trinkflaschenhalter befestigt werden kann. Die mindestens eine Verdickung ist vorzugsweise an einer in Richtung des Staufachs weisenden Innenseite des Deckelelements angeordnet. Insbesondere handelt es sich bei der Verdickung um einen sich im montierten Zustand in Längsrichtung des Fahrradrahmenrohrs erstreckende Wulst. Bevorzugt ist es, dass sich die, vorzugsweise als Wulst ausgeführte, Verdickung teilweise oder im Wesentlichen vollständig über die in Längsrichtung des Fahrradrahmenrohrs verlaufende Länge des Deckelelements erstreckt.

Nachfolgend wird die Erfindung anhand einer bevorzugten Ausführungsform unter Bezugnahme auf die anliegenden Zeichnungen näher erläutert.

Es zeigen:
- Figur 1: eine schematische Schnittansicht des Fahrrad-Staufaches in geschlossenem Zustand,
- Figuren 2 bis 4: eine der Figur 1 entsprechenden Schnittansicht, wobei das Hebelelement in unterschiedlichen Öffnungszuständen dargestellt ist, und
- Figur 5: einen der Figur 1 entsprechenden Schnittansicht mit geöffnetem Fixierelement.

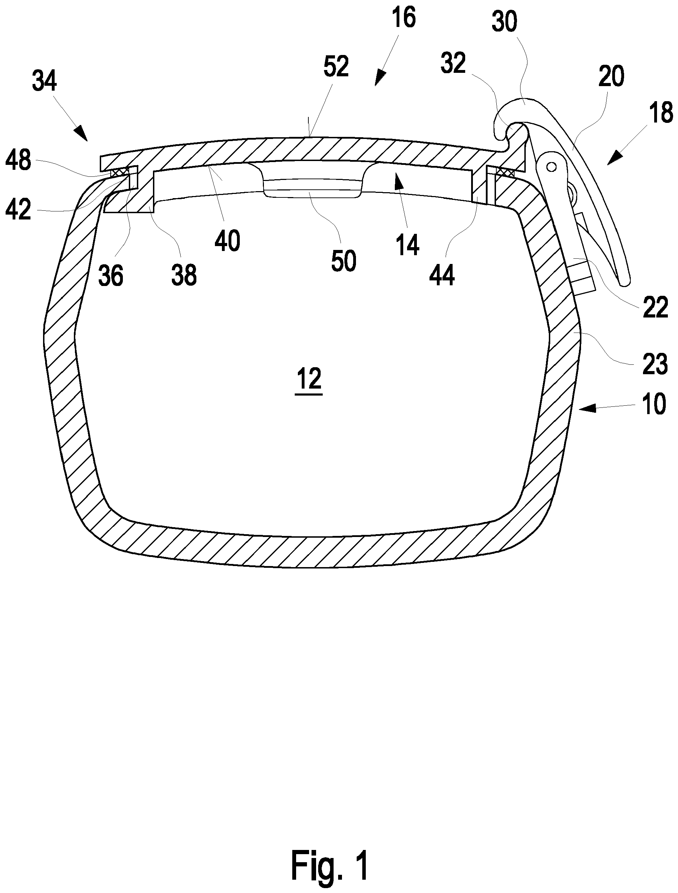

Ein Fahrradrahmenrohr 10, bei dem es sich insbesondere um ein Unterrohr eines Fahrradrahmens handelt, weist einen Innenraum 12 auf, der als Staufach ausgebildet ist. Hierzu kann im Innenraum 12 ein zusätzliches, das Staufach ausbildende Element vorgesehen sein, das beispielsweise zusätzliche Taschen, Fixierelemente, Halteriemen und dergleichen aufweist. Das Staufach 12 ist über eine im Fahrradrahmenrohr 10 angeordnete Öffnung 14 zugänglich, wobei die Öffnung 14 im dargestellten Ausführungsbeispiel an einer Oberseite des Fahrradrahmenrohrs vorgesehen ist. Die Öffnung 14 ist über ein Deckelelement 16 verschließbar. Das Verschließen erfolgt mit Hilfe eines mit dem Deckelelement 16 und dem Fahrradrahmenrohr 10 zusammenwirkenden Fixierelements 18. Dieses ist im dargestellten Ausführungsbeispiel auf der in Figur 1 rechten Seite des Fahrradrahmenrohrs 10 angeordnet, wobei spiegelbildlich auch auf der linken Seite ein entsprechendes Fixierelement vorgesehen sein kann.

Das Fixierelement 18 weist ein Hebelelement 20 auf, das im dargestellten Ausführungsbeispiel mittelbar über ein Basiselement 22 und einen Umlenkhebel 24 mit dem Fahrradrahmenrohr 10, insbesondere einer Seitenwand 23 des Fahrradrahmenrohrs 10 verbunden ist.

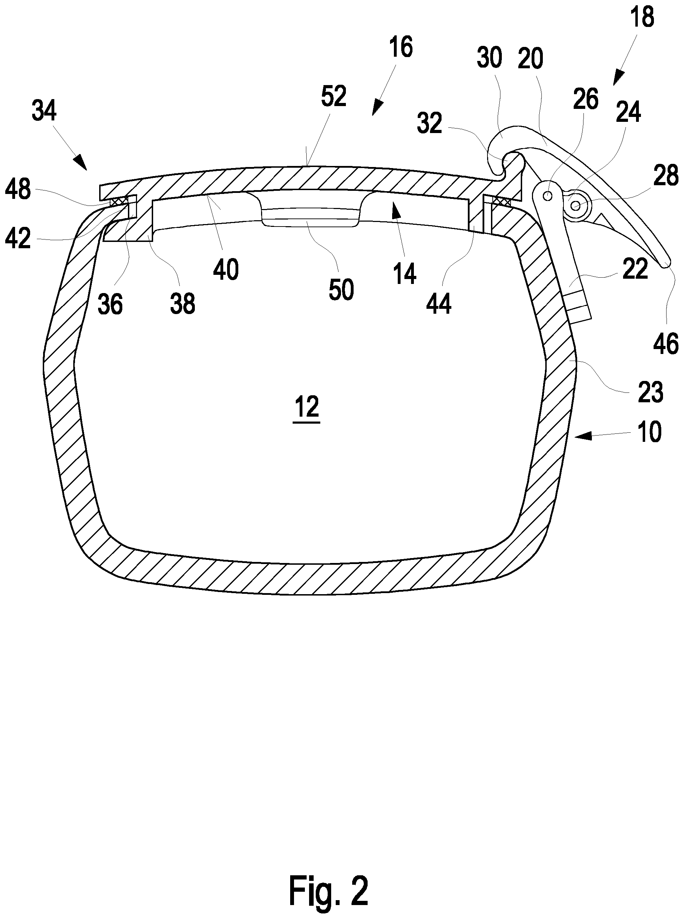

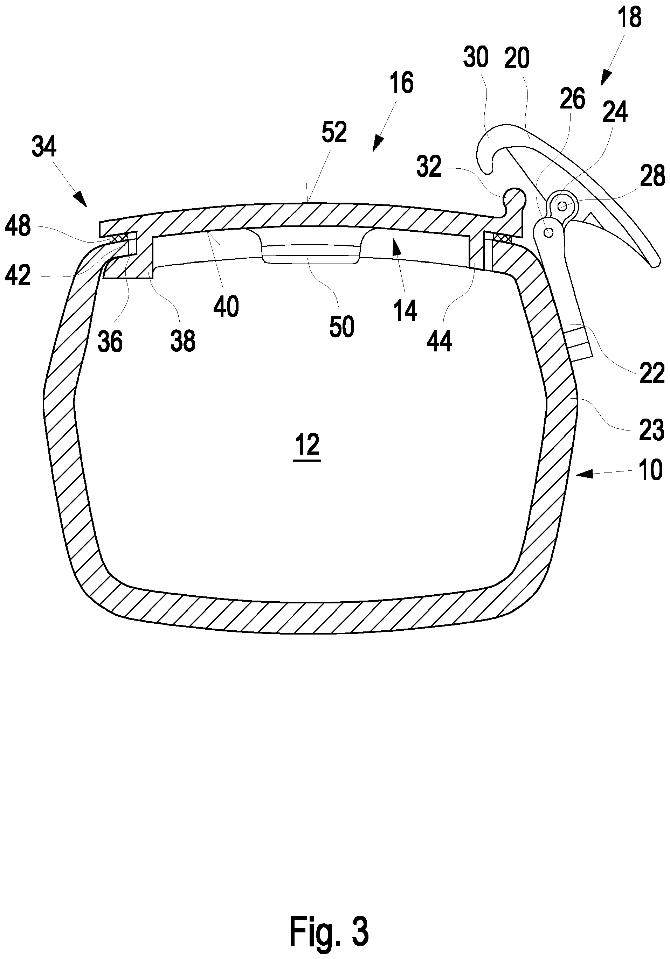

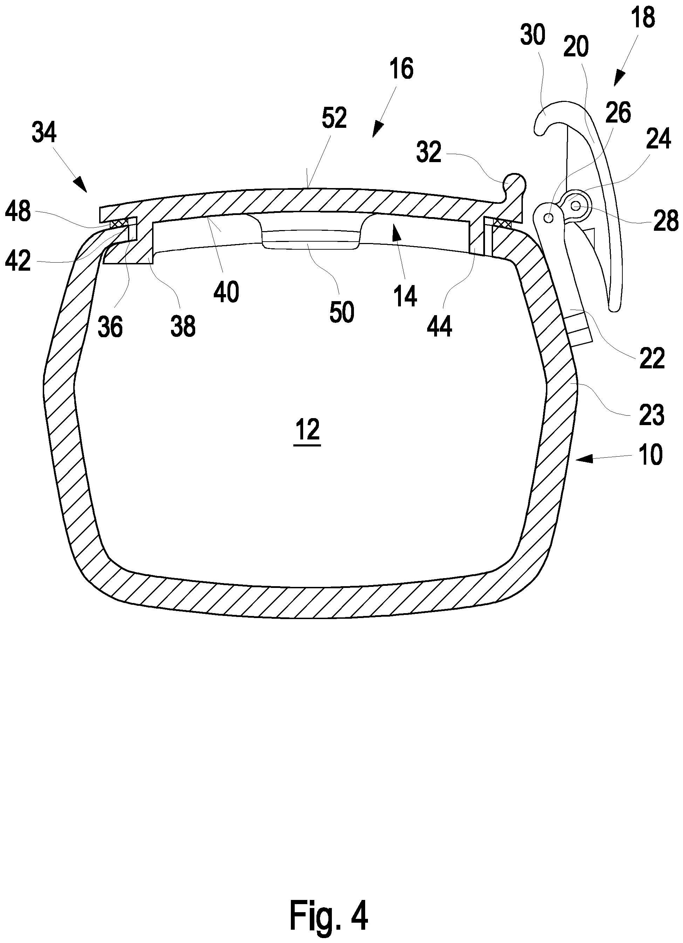

Das Basiselement 22 ist fest mit dem Fahrradrahmenrohr verbunden oder einstückig mit diesem ausgebildet. Mit dem Basiselement 22 ist der Umlenkhebel 24 über eine Zusatzachse 26 verbunden. Der Umlenkhebel 24 ist über eine Hauptachse 28 wiederum schwenkbar mit dem Hebelelement 20 verbunden. Das Hebelelement 20 kann somit wie insbesondere in den Figuren 2, 3 und 4 dargestellt, verschwenkt werden.

Ein Kopfteil 30 des Hebelelements 20 wirkt mit einem am Deckelelement 16 vorgesehenen Ansatz 32 zusammen. Hierbei kann das Kopfteil 30 eine konkav gekrümmte Innenseite aufweisen, die mit einer konvex gekrümmten Außenseite des Ansatzes 32 zusammenwirkt. Am Deckelelement 16 können in Längsrichtung des Fahrradrahmenrohrs, d.h. senkrecht zur Zeichenebene mehrere Ansätze 32 oder ein sich im Wesentlichen über die gesamte Seitenlänge des Deckelelements 16 erstreckender Ansatz 32 vorgesehen sein. Ebenso können mehrere Fixierelemente 18 senkrecht zur Zeichenebene in Längsrichtung des Fahrradrahmenrohrs 10 hintereinander oder ein sich im Wesentlichen über die gesamte Länge des Deckelelements 16 erstreckendes Hebelelement vorgesehen sein. In Längsrichtung des Fahrradrahmenrohrs 10 erstreckt sich das Deckelelement vorzugsweise über eine Länge von 10cm bis 20cm.

Auf der dem Fixierelement 18 gegenüberliegenden Seite des Deckelelements 16 ist ein Halteelement 34 angeordnet. Im dargestellten Ausführungsbeispiel weist das Halteelement 34 eine im Deckelelement angeordnete, sich in Längsrichtung senkrecht zur Zeichenebene erstreckende Nut 36 auf. Die Nut 36 ist beispielsweise durch einen im Querschnitt L-förmigen Ansatz 38 ausgebildet, der an einer Innenseite 40 des Deckelelements 16 ausgebildet ist. Zur Fixierung des Deckelelements 16 an der in Figur 1 linken Seite wird das Deckelelement derart angeordnet, dass in die Nut 36 ein durch das Fahrradrahmenrohr 10 ausgebildeter Vorsprung 42 eingreift.

Auf der Innenseite 40 des Deckelelements 16 ist auf der dem L-förmigen Ansatz 38 gegenüberliegenden Seite ein Führungsansatz 44 vorgesehen. Ein entsprechender Führungsansatz 44 kann auch an den in Längsrichtung vorgesehenen Vorderseiten und Rückseiten des Deckelelements 16 angeordnet sein, so dass ein umlaufendes Führungselement zur Justage des Deckelelements 16 in der Öffnung 14 des Fahrradrahmenrohrs 10 realisiert ist.

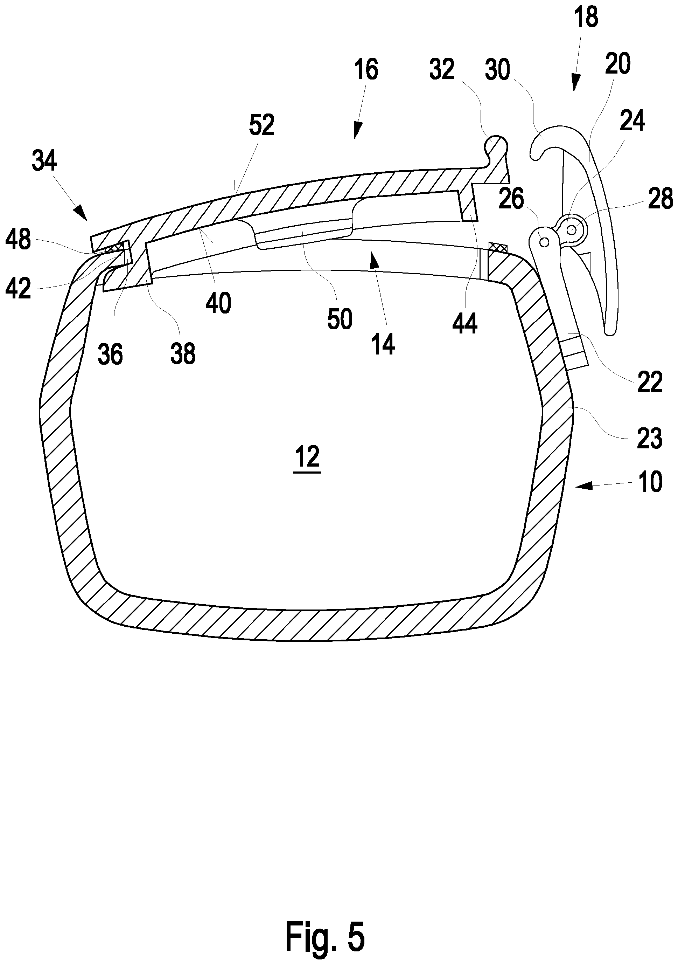

Aus der in Figur 1 dargestellten geschlossenen Stellung wird zum Öffnen des Deckelelements 16 der Hebel 20 um die Hauptachse 28 und der Umlenkhebel 24 um die Zusatzachse 26 verschwenkt, wie aus den Figuren 2, 3 und 4 ersichtlich. Anschließend kann das Deckelelement 16, wie in Figur 5 dargestellt, zur Freigabe der Öffnung 14 entnommen werden.

Zum Verschließen wird das Deckelelement 16 in die Öffnung 14 eingelegt und anschließend das Hebelelement 10 in die in Figur 2 dargestellte Stellung verschwenkt, sodass das Kopfteil 30 des Hebelelements 20 an dem Ansatz 32 anliegt. Anschließend wird ein freies Ende 46 des Hebelelements 20 in Richtung des Basiselements 22 bewegt. Hierbei wird eine zwischen dem Deckelelement 16 und dem Fahrradrahmenrohr angeordnete Dichtung 48 zusammengedrückt, bis der Hebel 20 an einem unteren Totpunkt angelangt ist. Dieser ist kurz vor vollständigem Verschwenken des Hebelelements 20 in Richtung des Basiselements 22 erreicht. Durch ein weiteres Verschwenken wird der Totpunkt entsprechend eines Kniehebelmechanismus überschritten, wobei die komprimierte Dichtung 48 wieder geringfügig dekomprimiert wird. Aufgrund der verbleibenden Restkompressionen der Dichtung 48 wird eine Gegenkraft erzeugt, die ein sicheres Verschließen und Fixieren des Hebelelements 20 in der Verschlussstellung gewährleistet.

An der Innenseite 40 des Deckelelements 16 ist in der dargestellten, bevorzugten Ausführungsform eine wulstförmige Verdickung 50 vorgesehen. Insbesondere erstreckt sich die Verdickung 50 teilweise in Längsrichtung des Deckelelements 16 oder im Wesentlichen über die gesamte Längsrichtung des Deckelelements 16. Durch Vorsehen der Verdickung 50 ist es möglich, in diesem Bereich des Deckelelements ein an einer Außenseite 52 des Deckelelements 16 offenes Halteelement wie eine Gewindehülse vorzusehen. Insbesondere durch Vorsehen von zwei Gewindehülsen in einem Abstand ist es möglich an der Außenseite 52 des Deckelelements 16 einen Flaschenhalter oder dergleichen anzuordnen.

## Patentansprüche

1. Fahrrad-Staufach mit,
einem innerhalb eines Fahrradrahmenrohrs (10), insbesondere eines Unterrohrs angeordneten Staufachs (12),
einem das Staufach (12) verschließenden Deckelelement (16) und
einem Fixierelement (18) zur lösbaren Fixierung des Deckelelements (16) am Fahrradrahmenrohr (10),
**dadurch gekennzeichnet, dass**
das Fixierelement (18) ein am Fahrradrahmenrohr (10) oder am Deckelelement (16) befestigtes Hebelelement (20) aufweist, das mit einem am Deckelelement (16) oder Fahrradrahmenrohr (10) vorgesehen Ansatz (32) zusammenwirkt.

2. Fahrrad-Staufach nach Anspruch 1, **dadurch gekennzeichnet, dass** das Hebelelement (20) über ein fest am Fahrradrahmenrohr (10) oder Deckelelement (16) befestigtes Basiselement (22) befestigt ist.

3. Fahrrad-Staufach nach Anspruch 1 oder 2, **dadurch gekennzeichnet, dass** das Hebelelement (20) über einen Umlenkhebel (24) am Fahrradrahmenrohr (10) oder am Deckelelement (16) vorzugsweise am Basiselement (22) befestigt ist.

4. Fahrrad-Staufach nach einem der Ansprüche 1 bis 3, **dadurch gekennzeichnet, dass** das Hebelelement (20) um eine Hauptachse (28) schwenkbar ist.

5. Fahrrad-Staufach nach Anspruch 3 oder 4, **dadurch gekennzeichnet, dass** der Umlenkhebel (24) um die Hauptachse (28) schwenkbar ist.

6. Fahrrad-Staufach nach einem der Ansprüche 3 bis 5, **dadurch gekennzeichnet, dass** der Umlenkhebel (24) über eine Zusatzachse (26) schwenkbar mit dem Basiselement (22) verbunden ist.

7. Fahrrad-Staufach nach Anspruch 6, **dadurch gekennzeichnet, dass** die Zusatzachse (26) parallel zur Hauptachse (28) verläuft.

8. Fahrrad-Staufach nach Anspruch 6 oder 7, **dadurch gekennzeichnet, dass** die Zusatzachse (26) und die Hauptachse (28) derart angeordnet sind, dass im geschlossenen Zustand das Fixierelement (18) durch Selbsthemmung geschlossen bleibt.

9. Fahrrad-Staufach nach einem der Ansprüche 1 bis 8, **dadurch gekennzeichnet, dass** das Fixierelement (18), insbesondere das Basiselement (22) des Fixierelements (18) an einer Seitenwand (23) des Fahrradrahmenrohrs (10) angeordnet ist.

10. Fahrrad-Staufach nach einem der Ansprüche 4 bis 9, **dadurch gekennzeichnet, dass** die Hauptachse (28) und/oder die Zusatzachse (26) im Wesentlichen in Längsrichtung des Fahrradrahmenrohrs (10) verlaufen.

11. Fahrrad-Staufach nach einem der Ansprüche 1 bis 10, **dadurch gekennzeichnet, dass** sich der Ansatz (32) parallel zur Hauptachse (28) erstreckt.

12. Fahrrad-Staufach nach einem der Ansprüche 1 bis 11, **dadurch gekennzeichnet, dass** das Deckelelement (16) auf einer dem Fixierelement (18) gegenüberliegenden Seite ein Halteelement (34) aufweist.

13. Fahrrad-Staufach nach Anspruch 12, **dadurch gekennzeichnet, dass** das Haltelement (34) eine Nut (36) aufweist, in die ein Vorsprung (42) eingreift, wobei die Nut (36) vorzugsweise im Deckelelement (16) und der Vorsprung (42) durch das Fahrradrahmenrohr (10) ausgebildet ist.

14. Fahrrad-Staufach nach einem der Ansprüche 1 bis 13, **dadurch gekennzeichnet, dass** an einer in Richtung des Fahrradrahmenrohrs (10) weisenden Innenseite (40) des Deckelelements (16) eine insbesondere umlaufende Dichtung (48) vorgesehen ist.

15. Fahrrad-Staufach nach einem der Ansprüche 1 bis 14, **dadurch kennzeichnet, dass** das Deckelelement (16) mindestens eine Verdickung (50) zur Aufnahme von mindestens einer Halterung aufweist.

16. Fahrrad-Staufach nach Anspruch 15, **dadurch gekennzeichnet, dass** die Verdickung an einer Innenseite (40) des Deckelelements (16), insbesondere als Wulst ausgebildet ist.
